# EUROPÄISCHE PATENTSCHRIFT

(11) **EP 0 860 334 B1**
(45) Veröffentlichungstag und Bekanntmachung des Hinweises auf die Patenterteilung: **27.06.2001**
(21) Anmeldenummer: 98102204.9
(22) Anmeldetag: 09.02.1998
(51) Int. Cl.: B60R 22/30

(54) **Verfahren zum Herstellen eines Arretierteils für einen Gurtversteller eines Fahrzeug-Sicherheitsgurtsystems**
Process for manufacturing the locking element of a belt adjuster for a vehicle restraining belt system
Méthode de fabrication de l'élément de blocage du dispositif d'adjustement d'une ceinture de sécurité pour véhicule

(30) Priorität: 12.02.1997 DE 19705386
(43) Veröffentlichungstag der Anmeldung: 26.08.1998
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Degwert, Hartmut, Dipl.-Phys.

(56) Entgegenhaltungen:
- DE-A- 2 905 832
- DE-U- 29 606 294

## Beschreibung

Die Erfindung betrifft ein Verfahren zum Herstellen eines Arretierteils für einen Gurtversteller eines Fahrzeug-Sicherheitsgurtsystems.

Mit einem solchen Gurtversteller kann die beispielsweise zwischen einem Beschlagteil und dem Gurtversteller zur Verfügung stehende Länge des Gurtbandes an den jeweiligen Bedarf angepaßt werden. Der Gurtversteller soll dabei zum einen eine möglichst einfache Einstellung der Länge des sich zwischen dem Gurtversteller und dem Beschlagteil erstreckenden, lastseitigen Abschnittes des Gurtbandes ermöglichen und zum anderen dann, wenn keine Verstellung gewünscht ist und auf das Gurtband eine Zugbelastung aufgebracht wird, das Gurtband sicher festlegen, so daß das freie Ende des Gurtbandes nicht durch den Gurtversteller hindurchgezogen werden kann. Ein solcher Gurtversteller besteht üblicherweise aus einem Halteteil, beispielsweise einer in ein Gurtschloß einsteckbaren Steckzunge, und einem Arretierteil. Das Arretierteil wird von dem Gurtband umschlungen und klemmt dieses, wenn in einer geeigneten Richtung auf das Gurtband eine Zugbelastung ausgeübt wird, zwischen sich und dem Halteteil fest.

Üblicherweise werden die Arretierteile aus Blech gestanzt. Problematisch dabei ist, daß an dem Arretierteil durch den Stanzvorgang Bearbeitungskanten entstehen. Diese Bearbeitungskanten führen zu einer Schwächung des Gurtbandes unter Belastung, da sie an genau den Kanten des Arretierteils liegen, an denen das Gurtband umgelenkt wird. Daher müssen durch Stanzen hergestellte Arretierteile entweder nachbearbeitet werden, so daß die Bearbeitungskanten geglättet werden, oder mit einem gesonderten Kantenschutz versehen werden.

Die DE-A-29 05 832 zeigt ein als Blechstanzteil ausgebildetes Arretierteil, wobei die Klemmwirkung auf das Gurtband über eine im Arretierteil angeordnete, senkrecht zum Gurtband verlaufende Nut erfolgt. Eine Abrundung der Kanten des Arretierteils kann durch ein auf das Arretierteil aufgesetztes Blechbiegeteil, das dessen Bearbeitungskanten überdeckt, erreicht werden.

Durch die Erfindung ist ein Verfahren zur Herstellung eines solchen Arretierteils geschaffen, mit dem in besonders kostengünstiger Weise ein Arretierteil hergestellt werden kann, das keinerlei Bearbeitungskanten aufweist, die zu einer Schwächung des Gurtbandes führen können. Gemäß der Erfindung enthält das Verfahren zum Herstellen eines Arretierteils für einen Gurtversteller eines Fahrzeug Sicherheitsgurtsystems mindestens die folgenden Schritte: Es wird ein Drahtstück vorbestimmter Länge hergestellt, das Drahtstück wird so gebogen, daß seine beiden axialen Enden gegenüber dem diese Enden verbundenden Mittelteil des Drahtstücks um im wesentlichen 90° abgebogen werden, das gebogene Drahtstück wird auf Maß gepreßt. Mit diesem Verfahren ergeben sich eine Reihe von Vorteilen. Zuerst ist das erfindungsgemäße Verfahren besonders kostengünstig, da das Arretierteil hergestellt wird, ohne daß Material verschenkt wird. Die Länge des Drahtstücks ist so bestimmt, daß sich nach den nachfolgenden Verfahrensschritten genau das gewünschte Arretierteil ergibt. Es tritt kein Verschnitt auf. Weiterhin kann durch das Pressen des Drahtstücks auf Maß eine an die in jedem Bereich des Arretierteils vorliegenden Belastungen angepaßte Materialdicke erzielt werden. Insbesondere können die axialen Enden des Drahtstücks einen anderen Querschnitt als das die axialen Enden des Drahtstücks verbindende Mittelteil des Drahtstücks haben. Dies läßt sich erzielen, obwohl das Drahtstück, von dem ausgegangen wird, einen konstanten Querschnitt hat. Weiterhin läßt sich mit dem erfindungsgemäßen Verfahren eine Kaltverfestigung des Werkstoffs erzielen, die bei der Dimensionierung des Arretierteils berücksichtigt werden kann. Durch die beim Umformen des Drahtstücks auftretende Kaltverfestigung läßt sich eine Steigerung der Festigkeit um bis zu 100 % gegenüber der Ausgangsfestigkeit erzielen. Daher können bei gleicher Gesamtfestigkeit des Arretierteils merklich kleinere Dimensionierungen verwendet werden. Auch dies führt zu einer Kostenverminderung. Aufgrund der auftretenden Kaltverfestigung ist auch eine Wärmebehandlung, wie sie bei aus Blech gestanzten Arretierteilen üblicherweise notwendig ist, überflüssig. Der wichtigste Vorteil, der sich mit dem erfindungsgemäßen Verfahren ergibt, besteht darin, daß bedingt durch das verwendete Verfahren keinerlei Bearbeitungskanten an dem Arretierteil auftreten, die zu einer Schwächung des Gurtbandes führen könnten. Das Arretierteil wird ausgehend von einem Drahtstück hergestellt, das einen runden Querschnitt hat. Durch die gemäß dem erfindungsgemäßen Verfahren vorgesehenen Bearbeitungsschritte kann dieser runde Querschnitt zwar unter Umständen verformt werden; die abgerundete Außenkontur bleibt jedoch grundsätzlich erhalten. Daher sind bei dem mit dem erfindungsgemäßen Verfahren hergestellten Arretierteile weder Nachbearbeitungsschritte noch zusätzliche Kantenschutzteile notwendig.

Die Erfindung wird nachfolgend unter Bezugnahme auf eine bevorzugte Ausführungsform erläutert, die in den beigefügten Zeichnungen dargestellt ist. In diesen zeigen:
- Figur 1 einen schematischen Querschnitt durch einen Gurtversteller in einem ersten Zustand, wobei das Arretierteil dieses Gurtverstellers mit dem erfindungsgemäßen Verfahren herstellbar ist;
- Figur 2 eine vergrößerte Teilansicht von Figur 1, wobei sich der Gurtversteller in einem zweiten Zustand befindet;
- Figur 3 das Arretierteil der Figuren 1 und 2 in einer perspektivischen Ansicht;
- Figur 4 eine Draufsicht auf das Arretierteil von Figur 3;
- Figur 5 eine Seitenansicht des Arretierteils von Figur 4; und
- Figur 6 einen Querschnitt durch das Arretierteil von Figur 4;
- Figur 7 schematisch einen ersten Schritt eines erfindungsgemäßen Verfahrens;
- Figur 8 schematisch einen zweiten Schritt eines erfindungsgemäßen Verfahrens;
- Figur 9 schematisch ein Arretierteil nach dem in Figur 8 dargestellten Verfahrensschritt; und
- Figur 10 schematisch einen dritten Schritt eines erfindungsgemäßen Verfahrens.

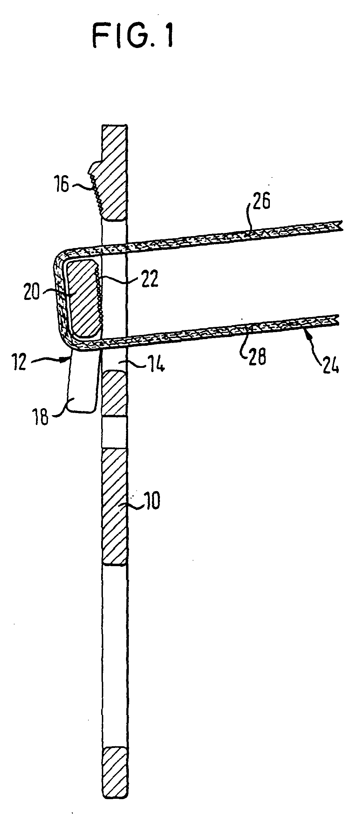

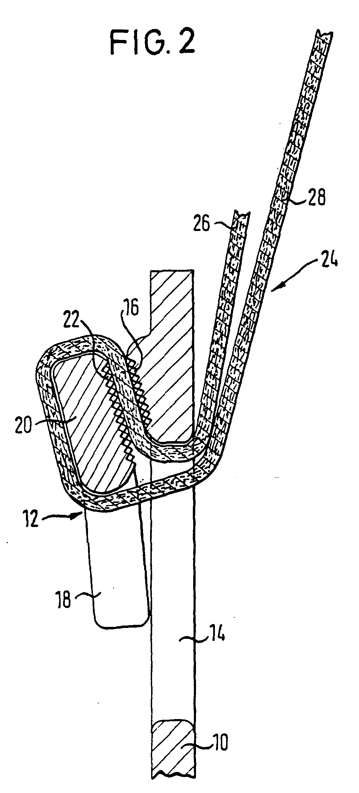

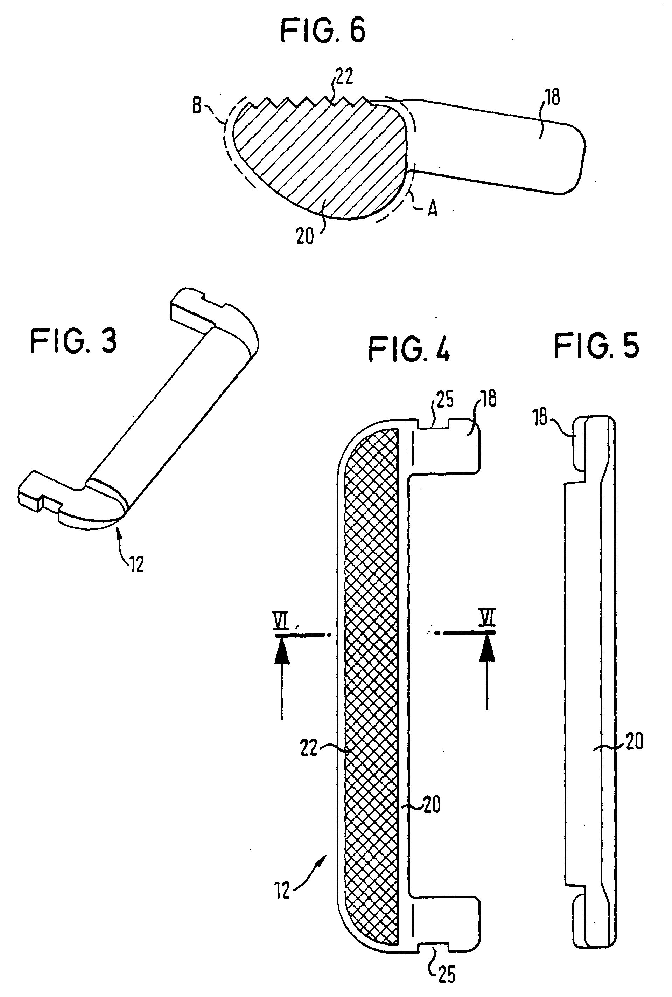

In den Figuren 1 und 2 ist ein Gurtversteller dargestellt, dessen Arretierteil mit einem erfindungsgemäßen Verfahren hergestellt werden kann. Dieses Arretierteil ist ausführlicher in den Figuren 3 bis 6 dargestellt. In Figur 1 ist der Gurtversteller in einem ersten Zustand gezeigt, in dem eine Verstellung der Länge des sich zwischen beispielsweise einem Beschlagteil und dem Gurtversteller erstreckenden, lastseitigen Abschnittes eines Gurtbandes möglich ist. In Figur 2 ist der Gurtversteller in einem zweiten Zustand dargestellt, in dem das Gurtband festgeklemmt ist.

Der Gurtversteller besteht aus einem Halteteil 10 und einem Arretierteil 12. Das Halteteil weist eine Durchtrittsöffnung 14 für das Gurtband und angrenzend an einen Rand dieser Durchtrittsöffnung 14 eine Anschlagfläche 16 auf, die relativ zu der Ebene der Durchtrittsöffnung um einen Winkel von etwa 15° geneigt ist.

Das Arretierteil 12 weist einen Abstützabschnitt 18 und einen Umlenksteg 20 auf, auf dessen dem Halteteil 10 zugewandten Seite eine Klemmfläche 22 gebildet ist. Der Abstützabschnitt 18 und die Klemmfläche 22 erstrecken sich in zueinander geneigten Ebenen, die miteinander einen spitzen Winkel einschließen. Sowohl die Oberfläche der Anlagefläche 16 als auch die Oberfläche der Klemmfläche 22 sind geriffelt, vorzugsweise mit einer Kreuzrändelung.

Das Gurtband 24 des Fahrzeug-Sicherheitsgurtsystems verläuft durch die Durchtrittsöffnung 14 hindurch, um den Umlenksteg 20 herum und zurück durch die Durchtrittsöffnung 14. Dabei durchquert das freie Ende 26 des Gurtbandes 24 die Durchtrittsöffnung 14 zwischen dem anlageflächenseitigen Rand der Durchtrittsöffnung 14 und dem lastseitigen Abschnitt 28 des Gurtbandes 24.

Bei dem in Figur 1 dargestellten Zustand des Gurtverstellers umschlingt das Gurtband 24 den Umlenksteg 20, ohne mit der Anlagefläche 16 oder der Klemmfläche 22 in Berührung zu gelangen. Dadurch kann die Länge des lastseitigen Abschnittes 28 des Gurtbandes besonders einfach an die jeweiligen Erfordernisse angepaßt werden, indem beispielsweise durch Ziehen am freien Ende 26 des Gurtbandes 24 überschüssige Gurtbandlänge zwischen einem Beschlagteil und dem Gurtversteller herausgezogen wird.

In Figur 2 ist der Gurtversteller in einem zweiten Zustand gezeigt, in welchem das Gurtband 24 sicher an dem Gurtversteller festgelegt ist. Durch eine Zugbelastung des lastseitigen Abschnittes 28 des Gurtbandes 24 in einer geeigneten Richtung relativ zum Gurtversteller ist das Arretierteil 12 relativ zu dem Halteteil 10 so verschoben worden, daß die Klemmfläche 22 des Arretierteils 12 gegenüber der Anlagefläche 16 des Halteteils 10 liegt. Bei einer Zugbelastung des lastseitigen Abschnittes 28 des Gurtbandes 24 führt die Umschlingungsreibung zwischen dem Gurtband 24 und dem Umlenksteg 20 zu einer Beaufschlagung der Klemmfläche 22 hin zur Anlagefläche 16. Durch diese Beaufschlagung wird das Gurtband 24 zwischen der Anlagefläche 16 und der Klemmfläche 22 sicher festgeklemmt.

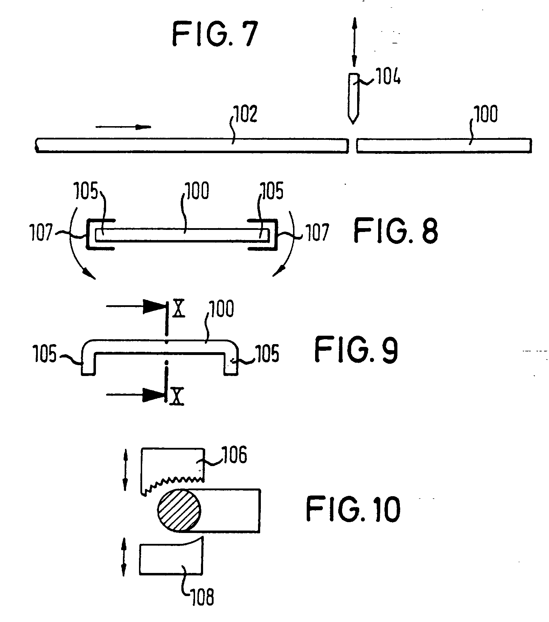

Nachfolgend wird anhand der Figuren 7 bis 10 das erfindungsgemäße Verfahren zum Herstellen des Arretierteils 12 beschrieben. Das Arretierteil 12 wird ausgehend von einem Drahtstück 100 hergestellt. Das Drahtstück wird durch Ablängen eines kontinuierlich bereitgestellten Drahtes 102 mittels eines schematisch dargestellten Trennwerkzeugs 104 erhalten. Die Länge des Drahtstücks 100 wird gemäß den Regeln für Materialumformung und in Abhängigkeit von den zu erzielenden Abmessungen des Arretierteils 12 gewählt.

Nachfolgend wird das Drahtstück 100 in die gewünschte Form gebogen. Hierbei werden insbesondere die beiden axialen Enden 105 des Drahtstücks gegenüber dem diese verbindenden Mittelteil durch ein schematisch dargestelltes Biegewerkzeug 107 um im wesentlichen 90° abgebogen. Das Drahtstück 100 hat nach diesem Schritt die in Figur 9 dargestellte Form. Da die später von den axialen Enden 105 gebildeten Abstützabschnitte 18 des fertigen Arretierteils 12 in derselben Ebene liegen müssen (siehe Figuren 3 und 5), liegen die beiden axialen Enden 105 des Drahtstücks 100 nach dem Biegen ebenfalls in derselben Ebene.

Nach dem Biegen in die gewünschte Form wird das Drahtstück auf Maß gepreßt. Hierbei wird insbesondere dem die beiden axialen Enden 105 des Drahtstücks 100 verbindenden Mittelteil, das nach dem Biegen weiterhin einen runden Querschnitt hat (siehe Figur 10), die gewünschte Gestalt gegeben. Hierzu wird eine Seite des Mittelteils abgeflacht und mit einer Kreuzrändelung versehen, so daß die Klemmfläche 22 des Arretierteils 12 gebildet wird. Weiterhin kann die der abgeflachten Seite gegenüberliegende Seite des Mittelteils in eine Form mit einer langgestreckten Rundung umgeformt werden. Eine bevorzugte Querschnittsform für den Mittelteil des Arretierteils 12 ist in Figur 6 zu sehen. Bei der Umformung des Mittelteils kommt es in den Abschnitten des von dem Mittelteil gebildeten Umlenkstegs 20, die hauptsächlich zur Umlenkung des Gurtbandes 24 beitragen (die Bereiche A und B von Figur 6), zu keinerlei Bearbeitungskanten, die zu einer Schwächung des Gurtbandes führen könnten, da lediglich der runde Querschnitt des Mittelteils geringfügig umgeformt wird. Die für das Umformen des Mittelteils verwendeten Preßwerkzeuge 106, 108 (siehe Figur 10) sind so gestaltet, daß glatte Übergänge zwischen den gepreßten Bereichen und den übrigen Bereichen des Mittelteils erhalten werden.

Neben dem Mitteilteil können auch die axialen Enden des Drahtstücks 100, die zu den Abschnittsabschnitten 18 des Arretierteils 12 werden, auf Maß gepreßt werden. Auf diese Weise können die Abmessungen der Abstützabschnitte 18 an die vorliegenden Belastungen angepaßt werden. Insbesondere läßt sich eine geringere Dicke der Abstützabschnitte 18 als bei den Umlenkstegen 20 erzielen. Gleichzeitig können Einprägungen 25 (siehe Figur 4) gebildet werden.

## Patentansprüche

1. Verfahren zum Herstellen eines Arretierteils (12) für einen Gurtversteller eines Fahrzeug-Sicherheitsgurtsystems, mit den folgenden Schritten:
- es wird ein gerades Drahtstück (100) vorbestimmter Länge hergestellt,
- das Drahtstück wird so gebogen, daß seine beiden axialen Enden (105) gegenüber dem diese Enden verbindenen Mittelteil des Drahtstücks (100) um im wesentlichen 90° abgebogen werden,
- das gebogene Drahtstück wird auf Maß gepreßt.

2. Verfahren nach Anspruch 1, dadurch gekennzeichnet, daß das Drahtstück (100) durch Ablängen eines kontinuierlich bereitgestellten Drahtes (102) hergestellt wird.

3. Verfahren nach einem der vorhergehenden Ansprüche, dadurch gekennzeichnet, daß die beiden axialen Enden (105) des Drahtstücks (100) in dieselbe Ebene abgebogen werden.

4. Verfahren nach einem der vorhergehenden Ansprüche, dadurch gekennzeichnet, daß beim Pressen des gebogenen Drahtstücks (100) auf Maß an seinen beiden axialen Enden eine Einprägung (25) gebildet wird.

5. Verfahren nach einem der vorhergehenden Ansprüche, dadurch gekennzeichnet, daß beim Pressen des gebogenen Drahtstücks (100) auf Maß sein Mittelteil aus einer Form mit im wesentlichen runden Querschnitt in eine Form mit an einer Stelle abgeflachtem Querschnitt gepreßt wird.

6. Verfahren nach einem der Ansprüche 3 und 5, dadurch gekennzeichnet, daß die Ebene, in der die Abflachung des Mittelteils liegt, mit der Ebene, in der die axialen Enden (105) des Drahtstücks (100) liegen, einen spitzen Winkel einschließt.

7. Verfahren nach Anspruch 5, dadurch gekennzeichnet, daß in die Abflachung eine reibungsfördernde Struktur (22) eingepreßt wird.

8. Verfahren nach Anspruch 7, dadurch gekennzeichnet, daß in die Abflachung eine Kreuzrändelung (22) eingepreßt wird.

## Claims

1. A method of fabricating a locking part (12) for a belt adjuster of a vehicle seat belt system, comprising the following steps:
- a straight piece of wire (100) of a predetermined length is produced,
- the piece of wire is bent such that its two axial ends (105) are bent through substantially 90° with respect to the middle portion of the piece of wire (100) connecting these ends,
- the bent piece of wire is pressed to size.

2. The method as set forth in claim 1, characterized in that the piece of wire (100) is produced by cutting to length a continuously fed wire (102).

3. The method as set forth in any of the preceding claims, characterized in that the two axial ends (105) of the piece of wire (100) are bent in the same plane.

4. The method as set forth in any of the preceding claims, characterized in that by pressing the bent piece of wire (100) to size, an indentation (25) is formed at each of its two axial ends.

5. The method as set forth in any of the preceding claims, characterized in that by pressing the bent piece of wire (100) to size, its middle portion is pressed from a shape having a substantially round cross-section into a shape having a flattened cross-section at one place.

6. The method as set forth in any of the claims 3 and 5, characterized in that the plane in which the flat is located includes an acute angle with the plane in which the axial ends (105) of the piece of wire (100) are located.

7. The method as set forth in claim 5, characterized in that a friction-promoting structure (22) is pressed into the flat.

8. The method as set forth in claim 7, characterized in that a cross-hatching (22) is pressed into the flat.

## Revendications

1. Procédé de fabrication d'un élément d'arrêt (12) pour un dispositif de réglage de ceinture d'un système de ceinture de sécurité pour véhicule, présentant les étapes suivantes:
- on fabrique un morceau de fil métallique (100) droit de longueur prédéterminée,
- le morceau de fil est cintré de telle sorte que ses deux extrémités axiales (105) sont repliées de sensiblement 90° par rapport à la partie médiane du morceau de fil métallique (100) qui relie ces extrémités l'une à l'autre,
- le morceau de fil cintré est estampé à la cote.

2. Procédé selon la revendication 1, caractérisé en ce que le morceau de fil métallique (100) est fabriqué en coupant à longueur un fil métallique (102) fourni de façon continue.

3. Procédé selon l'une quelconque des revendications précédentes, caractérisé en ce que les deux extrémités axiales (105) du morceau de fil métallique (100) sont repliées dans le même plan.

4. Procédé selon l'une quelconque des revendications précédentes, caractérisé en ce que, lors de l'estampage à la cote du morceau de fil métallique (100) cintré, une encoche (24) est estampée à ses deux extrémités axiales.

5. Procédé selon l'une quelconque des revendications précédentes, caractérisé en ce que, lors de l'estampage à la cote du morceau de fil métallique (100) cintré, sa partie médiane est amenée, par estampage, depuis une forme présentant une section sensiblement ronde à une forme présentant une section aplatie à un endroit.

6. Procédé selon l'une quelconque des revendications 3 à 5, caractérisé en ce que le plan dans lequel se situe la partie aplatie de la partie médiane forme un angle aigu avec le plan dans lequel se situent les extrémités axiales (105) du morceau de fil métallique (100).

7. Procédé selon la revendication 5, caractérisé en ce qu'une structure (22) favorisant le frottement est produite par estampage dans la partie aplatie.

8. Procédé selon la revendication 5, caractérisé en ce qu'un moletage en croix (22) est estampé dans la partie aplatie.
